(19)

Europäisches
Patentamt
European
Patent Office
Office européen
des brevets

(11) **EP 4 635 912 A1**

(12) **EUROPEAN PATENT APPLICATION**

(43) Date of publication:
**22.10.2025 Bulletin 2025/43**

(21) Application number: **24170488.1**

(22) Date of filing: **16.04.2024**

(51) International Patent Classification (IPC):
***C01B 32/182*** (2017.01) ***C01B 32/184*** (2017.01)

(52) Cooperative Patent Classification (CPC):
**C01B 32/184; C01B 32/182**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Scuola Superiore Sant'Anna di Pisa
  56127 Pisa (IT)**
• **Technische Universität Graz
  8010 Graz (AT)**
• **Universita' Degli Studi di Firenze
  50121 Firenze (IT)**
• **Consorzio per lo Sviluppo dei Sistemi a
  Grande Interfase (CSG)
  50019 Sesto Fiorentino (FI) (IT)**

(72) Inventors:
• **Dallinger, Alexander
  8010 Graz (AT)**
• **Greco, Francesco
  51010 Massa e Cozzile (PT) (IT)**
• **Giorgi, Rodorico
  59100 Prato (IT)**
• **Camerini, Rachel
  50125 Firenze (IT)**

(74) Representative: **Tiburzi, Andrea et al
Barzanò & Zanardo Roma S.p.A.
Via Piemonte 26
00187 Roma (IT)**

(54) **METHOD OF SCRIBING LASER-INDUCED GRAPHENE**

(57)     The present invention relates to a method of scribing laser-induced graphene (LIG) comprising the steps of: coating or soaking a substrate material with at least one pure dye or a dye dispersion or a dye solution; setting at least one laser parameter for laser-induced pyrolysis; and exposing the dye to the laser.

Fig. 4

EP 4 635 912 A1

# Description

## Technical field

The present invention relates to a method of scribing laser-induced graphene. The present invention also relates to a product obtained by scribing laser-induced graphene.

## Background art

Over the past decade, graphene-based nanomaterials have been widely studied owing to their unique physical and chemical properties.

Laser-induced graphene (LIG) is a specific three-dimensional porous form of graphene prepared by laser irradiation of a variety of substrates, notably polymers, polyimide and/or polysulfones, e.g., polyethersulfones.

Graphene-polymer composites, generally, improve the electrical and thermal properties of the polymer and enhance the mechanical and chemical stability of graphene materials.

A current method of scribing laser-induced graphene (LIG) involves the carbonization of polymer films/sheets, acting as "precursors" of LIG. The polymer films/sheets are turned into LIG by appropriate exposure to laser scribing at suitable wavelength and with suitable laser fluence.

The polymer sheet may then be applied to a product or substrate, for example by adhesion.

The current method of scribing LIG has several disadvantages.

One disadvantage of the current method is that the polymer precursors are in a solid form or have to be cross linked after being used as a coating. They must be irradiated and applied to a substrate. They cannot thus be applied to any surface so easily.

Another disadvantage is due to the fact that most of polymer precursors for LIG are high-performance polymers (such as polyimide) which are expensive and need to be processed in the form of sheets and rolls of suitable thickness.

## Disclosure of the Invention

The aim of the present invention is to provide a method for LIG patterning which can be applied to a substrate of any material and any shape.

Another purpose of the present invention is to apply the LIG to a substrate in a reliable and effective way.

The invention achieves the object by means of a method of scribing laser-induced graphene having the features defined in claim 1.

The method of the present invention allows coating of any wettable surface with a layer of suitable dye/dyes dispersed or dissolved in a dispersing medium or solvent to act as a carbonization precursor for laser-induced pyrolysis to scribe conductive LIG tracks.

The use of dyes in their pure or dispersed form in inks or paints hugely increase the possibility of application onto different substrates, with little effort and little chemical compatibility issues, with respect to normal polymer precursors of LIG which are typically hardly soluble in dangerous solvents. Any method for applying inks or paints to substrates, for example spray coating, screen printing and others, can also be used.

In one embodiment, the dye is a pure dye. A pure dye is a dye consisting of one specific molecule.

The pure dye may be in the form of powder.

The pure dye in the form of powder is preferably diluted in water creating a solution. The pure dye in solution is used to coat or soak the substrate.

After drying and evaporation of the water the pure dye, in the form of a film is laser irradiated.

In another embodiment, at least one dye is dissolved in a solvent like methanol, and/or water, and/or alcohol. The solution is preferably a pure solution, consisting of at least one dye and at least one solvent. No binder is added to the solution.

The solution is used to coat or soak the substrate and dried, leaving the pure dye in the form of a film before laser irradiation.

In another embodiment, a dye dispersion is used to coat or soak the substrate before irradiation. The dispersion preferably comprises at least one dye and at least one acrylic paint.

## Brief description of the drawings

The present invention is now described, by way of example and without limiting the scope of the invention, with particular reference to the accompanying drawings, in which:

figure 1 shows schematically laser-graphene scribing according to a first embodiment known in the art;
figure 2 shows schematically laser-graphene scribing according to a first embodiment known in the art;
figure 3 shows schematically the method according to the present invention;
figure 4 shows schematically laser-graphene scribing according to a fist embodiment of the present invention;
figure 5 shows schematically laser-graphene scribing according to a second embodiment of the present invention;
figure 6 shows schematically an apparatus for laser defocus;
figure 7 shows the effect of the defocus on two xanthene dyes and polyimide;
figure 8 shows the thermogravimetric analysis of Eosin Y and Eosin B in air and in nitrogen;
figure 9 shows the thickness of the LIG layer measured by using a Focused Ion Beam (FIB) prepared cross section in a preferred embodiment;

figure 10 shows the Raman spectrum of the carbonized material (LIG) obtained by laser scribing a dried film obtained from a solution of Eosin Y in methanol;

figure 11 shows the thickness of the LIG measured by using a

Focused Ion Beam (FIB) prepared cross section in another preferred embodiment;

figure 12 shows the Raman spectrum of the carbonized material (LIG) obtained by laser scribing a dried film obtained from a dispersion of Eosin Y in acrylic paint.

## Preferred embodiments of the invention

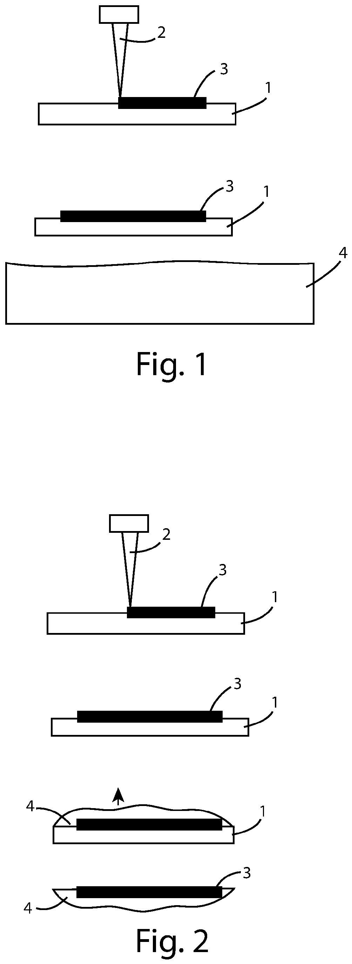

Figure 1 shows schematically the method of scribing laser-induced graphene (LIG) according to the prior art in a first embodiment.

A polymer sheet or film 1, like a sheet of polyimide, is irradiated by a laser beam 2. The polymer acts as a carbon precursor for the laser-induced pyrolysis, so that a layer of laser-induced graphene 3 is formed on the polymer sheet 1.

The polymer sheet 1 may then be applied to a substrate 4, for example by adhesion. Figure 2 shows schematically the method of scribing laser-induced graphene (LIG) according to the prior art in a second embodiment.

A polymer sheet or film 1, like a sheet of polyimide, is irradiated by a laser beam 2. The polymer acts as a carbon precursor for the laser-induced pyrolysis, so that a layer of laser-induced graphene 3 is formed on the polymer sheet 1.

The polymer sheet 1 may then be embedded into a substrate 4, for example into a soft and flexible substrate like silicone.

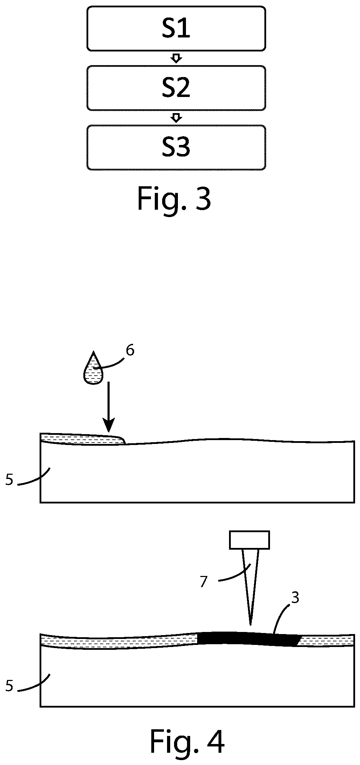

Figure 3 shows schematically the method of scribing LIG according to the present invention.

According to the present invention, a method of scribing laser-induced graphene (LIG) comprises the steps of: (S1) coating or soaking a substrate material with a pure dye or a dye solution or a dye dispersion; (S2) setting at least one laser parameter for laser-induced pyrolysis; and (S3) exposing the pure dye or the dye solution or the dye dispersion to the laser.

A pure dye is a chromophore substance, i.e a substance having the property of absorbing part of the visible spectrum. The color is given by the fraction of light not absorbed by the dye but reflected.

The pure dye may be in liquid form or in the form of powder.

The pure dye in the form of powder is preferably diluted in water.

In a preferred embodiment the solution comprises at least one dye dissolved in methanol, and/or water, and/or alcohol. In particular the solution is a pure solution, wherein no binder is added. The solution preferably consists of at least one dye dissolved in methanol, and/or water, and/or alcohol.

In another embodiment, the dispersion comprises at least one dye and at least one acrylic paint.

In a preferred embodiment, the dye comprises at least one organic substance.

Preferably, the dye comprises a low molecular weight substance.

In particular, the dye presents hyperconjugation of bonds.

Advantageously, the dye comprises at least one aromatic group.

Preferably, the pure dye or dye dispersion or solution comprises at least one xanthene dye.

In particular, the xanthene dye is Eosin B or Eosin Y.

In a preferred embodiment, a pure dye in powder form is diluted in purified water with a concentration of about 0.3 mol/L.

In another preferred embodiment, a solution of a dye in methanol is used. The concentration is preferably comprised between about 0.1 mol/L and about 0.6 mol/L, more preferably between about 0.3 and about 0.5 mol/L.

In a further preferred embodiment, a dispersion of a dye in acrylic paint is used. Advantageously the dispersion comprises a mixture of acrylic paint, a dye, and water, in particular deionized water. The concentration of the dye is comprised between about 0.2 mol/L and about 0.75 mol/L.

Preferably, the method comprises the step of drying the pure dye or the dye solution or the dye dispersion after coating or after soaking the substrate material with a pure dye with a dye solution or dispersion.

The dye solution or dispersion is applied to the substrate and the solvent evaporates leaving the solid parts.

The thickness of the film on the substrate is preferably comprised between about 2000 nm and 15000 nm.

In particular, the thickness of the film is comprised between about 2000 and about 4000 nm for a dye solution. Preferably, the thickness of the film is comprised between about 4000 and 15000 nm for a dye dispersion.

Figure 4 shows schematically the method of scribing LIG according to a first embodiment of the present invention.

A substrate 5 is directly coated with a pure dye, preferably in liquid form or diluted, or with a dye solution or dispersion 6.

Then the substrate 5 with the coating is irradiated by a laser beam 7.

The dye acts as a carbon precursor for the laser-induced pyrolysis, and is transformed into laser-induced graphene 8.

With respect to the prior art, the LIG is thus already in or on the substrate, and does not need to be applied as a separate part.

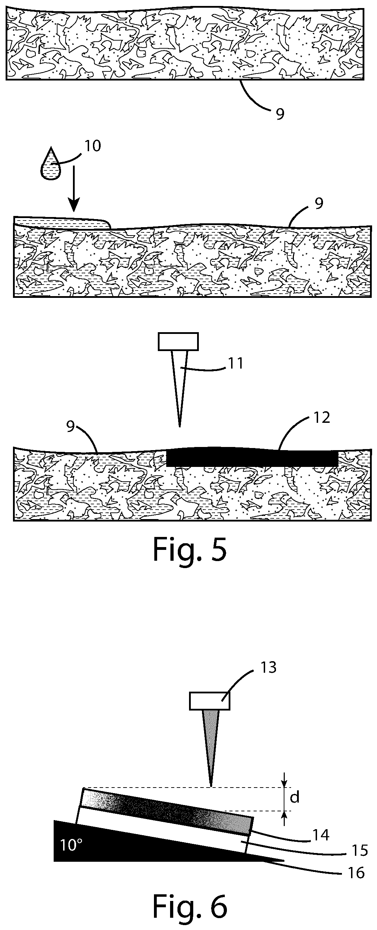

Figure 5 shows schematically the method of scribing LIG according to a second embodiment of the present invention.

The substrate is a biological substrate 9. Examples of biological substrates are leaves, bamboo, etc.

A pure dye in liquid form or diluted or a dye solution or dispersion 10 is applied to the substrate 9 so as to coat and impregnate the substrate. Then the substrate 9 with the coating is irradiated by a laser beam 11. The dye acts as a carbon precursor for the laser-induced pyrolysis, and is transformed into laser-induced graphene 12. Optionally, another layer of any suitable material is applied on top to cover up the scribed carbon tracks.

According to a preferred embodiment, the substrate is washed after the LIG has been formed.

Preferably the dye is included in the formulation of an ink or a varnish, like an acrylic paint.

The choice of the ink or varnish containing the dye depends on the substrate to which the LIG has to be applied.

The laser fluence is set for laser-induced pyrolysis.

This depends on the kind of dye which is used. The laser fluence also depends on the substance, like ink or varnish, including the dye which is used.

The LIG which forms comprises a porous 3D structure.

In one embodiment, the porous 3D structure comprises small defective graphene flakes. It is possible to change the laser fluence to modify the structure of the LIG.

Any setup with a laser, from IR to UV, from continuous wave to femtosecond laser, can be used to carry out the method.

The laser can consist of a movable laser head or a Galvanometer scanner and a sample table, or a handheld laser.

The laser is directed on the sample with a certain defocus, laser power and scribing speed, depending on the precursor material.

In the illustrative embodiments, a 10.6 $\mu$m IR $CO_2$ laser cutter with a nominal power Pmax = 30 W is used.

The laser is equipped with an HPDFO™ beam collimator (High Power Density Focusing Optics) with a nominal beam size of 30 $\mu$m.

The laser has a movable laser head similar to a 3D printer and scribes the sample in a line-by-line pattern.

The standard settings for the IR laser are the following:

> power P = 10%,
> speed S = 10% (translates into ca. 100 mm/s),
> raster resolution = 500 PPI (point per inch, distance of laser spots per line),
> image density of 5 (arbitrary scale, defining a spacing between consecutive rastered lines of 280 $\mu$m),
> Defocus = 2.1 mm

With reference to figure 6, the substrate 14 is placed on a support 15 forming an angle of 10° with a horizontal surface 16.

The laser 13 is focused on the top portion of the support and is defocused by moving parallel to the horizontal surface 16 to the thinner side of the support 15.

According to a preferred embodiment, dye films were produced by spin coating a solution or dispersion of the dye onto microscope glass slides (25 × 75 × 1 mm, ISO 8037/1).

The dye used as a carbon precursor for the laser-induced pyrolysis has a high temperature stability observed via thermogravimetric analysis (TGA).

According to a preferred embodiment, the dye has thermal stability between about 400°C and about 800°C, in particular between about 600°C and about 800°C measured via thermogravimetric analysis.

Advantageously, the dye has a residual weight ≥ 20% at a temperature between about 600°C and about 800°C in air.

Preferably, the dye has a residual weight between about 20% and about 30% in a range of temperature from about 600°C to about 800°C measured in air. In particular the dye has a residual weight of about 20% at a temperature ≥ about 800°C measured in air.

In a first illustrative embodiment, pure dye powders are used or are diluted in purified water.

Eosin Y and Eosin B are preferably used as dyes.

Dye films are produced by spin coating a solution of the dye in methanol onto microscope glass slides. The concentration of the solution is preferably 0.3 mol/L. The solution is dried and exposed to the laser.

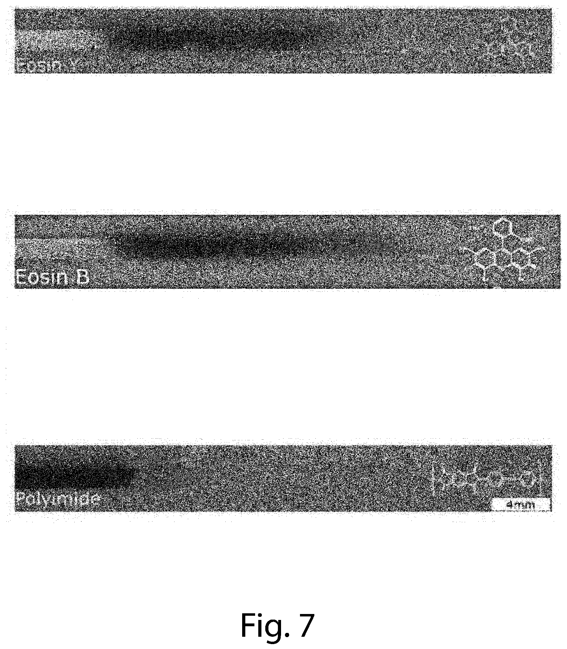

Figure 7 shows the effect of a continuous defocus of an IR laser on different xanthene dyes and on polyimide. In particular, Eosin Y and Eosin B are considered. The dark portion shows the creation of LIG.

The results show that xanthene dyes like Eosin Y and Eosin B are LIG good precursors.

In the illustrative embodiment, the fluence is approximately H=(1.0 ± 0.2) J/cm² for a film of Eosin Y with a thickness of t = (3590 ± 1400) nm.

Compared to polyimide, the carbonization of the Eosin Y and Eosin B requires less fluence with higher defocus of the laser.

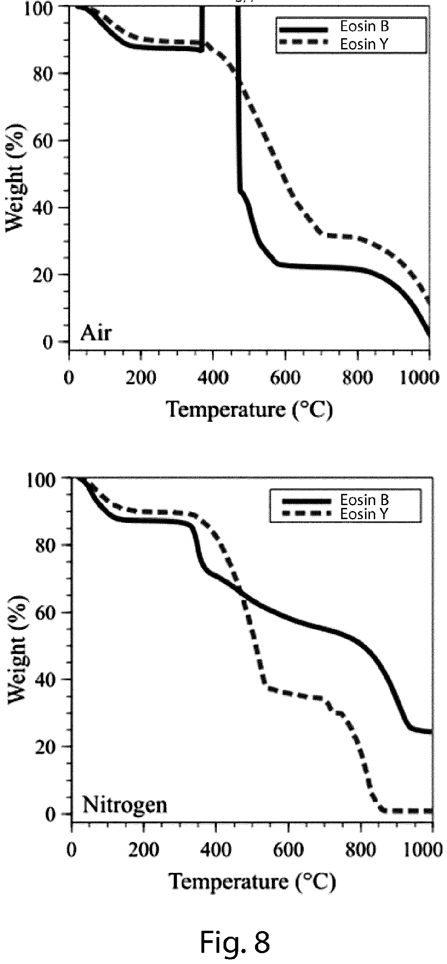

Figure 8 shows Thermogravimetric analysis (TGA) conducted on the xanthene dyes Eosin Y and Eosin B in different atmospheres (air and nitrogen).

TGA showed that, in the range 0-300°C, the investigated xanthene dyes share a similar behavior in inert atmosphere (nitrogen) at a heating rate of 10°C/min and in air at a heating rate of 100°C/min.

Eosins show a significant initial mass loss. Above 300°C, Eosin Y and Eosin B have different thermal behavior, but both of them show significant mass loss between 300°C - 600°C. However, they share high stability above 600°C, reaching major or complete decomposition after 900°C and 1000°C, in nitrogen and air atmosphere, respectively.

Overall, the measurements in air at a higher heating rate showed a shift to higher decomposition temperatures with respect to those in nitrogen at a lower heating rate, without significant changes in the decomposition path.

Thermogravimetric analysis performed of Eosin B in air at a heating rate of 10°C/min showed an intermediate thermal behavior, i.e. total decomposition occurring within 900°C, confirming that residual mass is found only in inert atmosphere, despite of the heating rate.

The actual conditions present during laser-induced pyrolysis are situated between inert and air surroundings since the process also takes place within the material, in the absence of an external atmosphere.

From the thermogravimetric curve for Eosin Y it can be derived that Eosin Y is able to retain mass (around 25-30%) in the range 600-800°C in air.

For Eosin B a slightly smaller retained mass can be observed in this temperature range.

In a second illustrative embodiment, Eosin Y is dissolved in methanol.

The dye is mixed with methanol in the concentration is M = 0.43 mol/L.

The dye solution is spin coated onto microscope glass slides resulting in a film of thicknesses tM = (2500 ± 200) nm.

The solvent evaporates entirely.

A screening of the fluence space via continuous defocus was done and the LIG's sheet resistance was measured.

At a defocus of d = 0 and a power of P = 5%, a sheet resistance of 510 ± 25 Ω/□ is measured.

At a defocus of d = 2.1 mm and a power of P = 10%, a minimum sheet resistance of 156 ± 7 Ω/□ is measured.

At a defocus of d = 1.9 mm and a power of P = 20%, a sheet resistance of 470 ± 40 Ω/□ is measured.

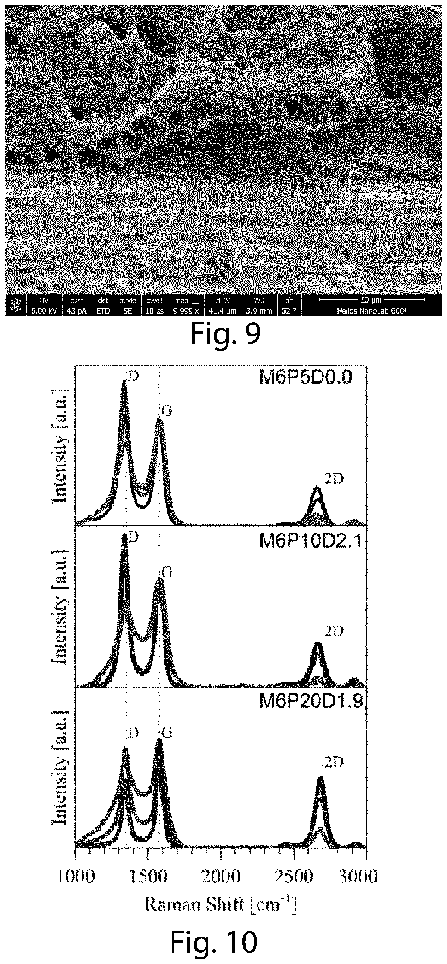

The thickness of the LIG layer for the sample with a minimum sheet resistance (sample M6P10D2.1) was measured by using a Focused Ion Beam (FIB) prepared cross section (Figure 9). The measured thickness was t(LIG) = 3590 ± 1400 nm. The increase in thickness of the LIG layer compared to the dye film before laser-induced pyrolysis can be explained by the porosity of the LIG layer induced by the degassing during laser scribing.

Using the thickness value, sheet resistance and the following equation:

$$(1)\ \sigma = R_s \times t$$

wherein:

o=conductivity
Rs=sheet resistance
t=thickness

the conductivity of the M sample is estimated to be σ = 21 ± 9 S/cm, a value comparable with the conductivity of polyimide derived LIG.

Raman spectroscopy and the appearance of the 3 peaks/bands (D, G, 2D) indicate the presence of graphene and LIG (figure 10). This is different from "amorphous carbon" (not crystalline, not graphitic) which has broader bands and is missing the 2D band. The width of each band and the ratio of intensity among the various bands indicates how much ordered/disordered the structure is.

The sample scribed with low power P=5% show a ID/IG ratio of 1.0 ± 0.4, similar to the setting with the best sheet resistance, M6P10D2.1 (ID/IG = 1.1 ± 0.3). Although the high power setting yields LIG with a high sheet resistance, the ID/IG ratio of 0.7 ± 0.1 indicates a lower amount of defects. The 12DIIG ratio is 0.2 ± 0.2 for lower powers of (P=5% and 10%) and increases for P=20% to 0.5 ± 0.2.

Scanning electron microscopy (SEM) for sample M6P10D2.1 reveals an uninterrupted porous structure, with some superficial brighter dots, and irregular micrometric pores.

In a third illustrative embodiment a dye is dispersed in a non-carbonizable material, such as acrylic paint.

Dyes are commonly used as dispersions in other media, such as coatings and paints.

Dispersion with the carbonizable dye allows carbonization of otherwise non-carbonizable materials, such as acrylic paint, as shown in this embodiment.

The investigations were the same as for the pure dye films and started with an investigation of the laser fluence space via continuous defocus.

In the case of the dispersion in acrylic paint, the concentration of the dye did not only reflect in the thickness of the resulting film, but also the amount of dye dispersed in the paint.

In this embodiment, Eosin Y was used as a dye.

A mixture of water-based acrylic paint (0.5g), Eosin Y and deionized water (0.1g) was mixed according to the following Eosin Y amounts:

AH2: 0.2g (resulting in 0.5 mol/L).
AH3: 0.3g (resulting in 0.75 mol/L).

Each concentration was mixed by hand and spin coated onto microscope glass slides.

The film thicknesses for the different dye concentrations are:

$$t_{AH2} = 6800 \pm 750\ nm,$$

$$t_{AH3} = 11200 \pm 1700\ nm.$$

The sheet resistance decreases with power and concentration.

Sheet resistance for AH2 is higher as for AH3 with higher dye concentration.

For P=10%, a sheet resistance Rs = 180 ± 10 Ω/□ is measured for AH2 at 2.1 mm defocus and a sheet resistance Rs = 65 ± 6 Ω/□ is measured for AH3 at 2.2 mm defocus.

For P=20%, a sheet resistance Rs = 170 ± 60 Ω/□ is measured for AH2 at 3.8 mm defocus and a sheet resistance Rs = 37 ± 13 Ω/□ is measured for AH3 at 3.6 mm defocus.

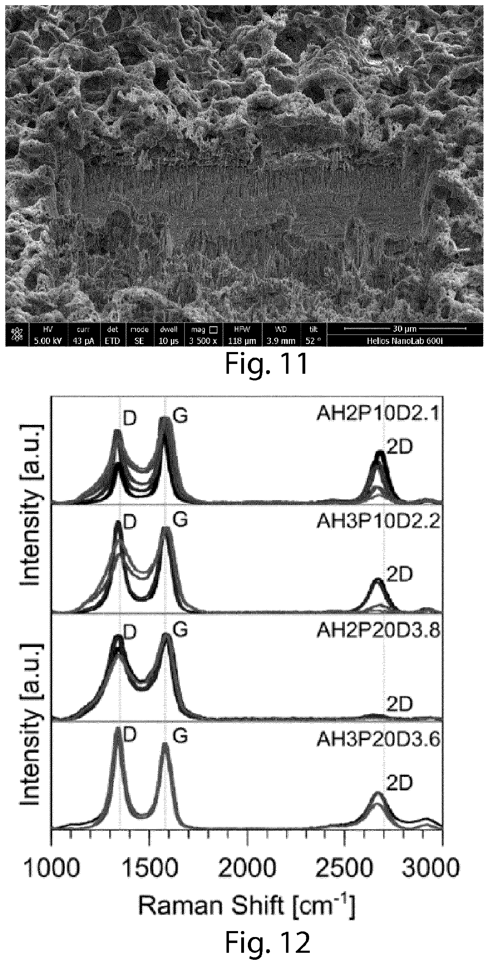

The thickness of the LIG layer for AH3 at P=20% and defocus 3.6 mm (t=11280 ± 3570 nm) was measured by using a FIB prepared cross section (Fig. 11).

Using the thickness value, sheet resistance and equation 1 the conductivity was estimated to be 34 ± 20 S/cm. This value is comparable with the result from the pure dye layer and polyimide derived LIG.

Raman spectra for AH2 and AH3 are plotted in Figure 12. Typical bands associated with LIG are present and an ID/IG ratio of 0.7 ± 0.2 and 0.8 ± 0.2 were measured for AH2 and AH3 at a power of 10%, respectively.

For a power of 20% the ratios do not change drastically and are 0.8 ± 0.1 and 1.1 ± 0.1 for AH2 and AH3, respectively. 12DIIG ratios are 0.4 ± 0.2 and 0.1 ± 0.2 for AH2 and AH3 at a power of 10%, respectively. These values are comparable with the ones from the pure dye films (ID/IG ≈ 1) showing the lowest sheet resistance.

SEM images of the selected samples show a multi-layered porous structure of LIG. With a defocus ranging from 2 to 4 mm, higher laser powers and more thick films produced a more continuous and regular 3D structure.

The morphologies observed by SEM again reflect the observed trend in sheet resistance where the highest concentration of dye results in the best conductive film. On the other hand, AH3 samples turned into the typical multi-layered porous structure of graphene, with homogeneous micrometric pores. Sub-micrometric superficial dots are also detected. With a defocus ranging from 2 to 4 mm, higher laser powers and more thick films produced a more continuous and regular 3D structure.

Compared to dye only films, acrylic paint acts as a 'glue' that keeps the precursor molecules closely packed and allows for their rearrangement into two-dimensional layers of carbon atoms with sp2 hybridization that are connected in the typical hexagonal lattice structure.

Furthermore, evidence was found that the dye also acts as a sort of catalyst or seeding point for further carbonization of the acrylic paint resulting in much denser films as compared to dye only films.

The material obtained by the method according to the present invention may be used in applications already known for LIG, such as conductive tracks, circuits, sensors, electrodes or energy storage devices, but it can also be used for new applications such as functionalized coatings, since a layer of carbonizable material can be applied to any wettable surface or absorbing material, including biological ones.

With respect to the prior art, the LIG is already in the substrate, and does not need to be applied as a separate part.

Therefore, there is no limitation as regards chemical compatibility.

Moreover, the suitable dyes identified as good LIG precursors are mass produced and cheap, and usable in any form (powder, dispersion, etc.).

The method according to the invention has the advantage that the dye can be dispersed or dissolved in a carrier material (e.g. paint, coating ...) and applied to any wettable surface with common techniques such as printing, spray painting, etc. As opposed to the usual polymer precursors for LIG, which are expensive, high-performance polymers, the dye precursors for LIG are mass-produced and inexpensive, and can be used in any form (powder, dispersion, etc.).

The dyes which can be easily applied to a substrate and can even be commercially available dyes, like colour pens or markers. Several dispersing media and dispensing/deposition techniques for inks and dyes (pens, markers, paint, spray, print, etc.) can be used to coat any wettable surface.

The subsequent scribing/pyrolysis is operated with a laser scribing equipment which can be custom or commercially available, as, for example, those used in mechanical workshops or DIY for cutting/engraving of materials, or in manufacturing for laser marking of products. Modern galvo-based laser scribers allow scribing on non-flat and non-smooth surfaces, extending application to surfaces with arbitrary shapes.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Method of scribing laser-induced graphene (LIG) comprising the steps of:

   S1. coating or soaking a substrate material with at least one pure dye or a dye solution or a dye dispersion;
   S2. setting at least one laser parameter for laser-induced pyrolysis; and
   S3. exposing the dye to the laser.

2. Method according to claim 1, wherein the solution comprises at least one dye dissolved in methanol, or water, or alcohol.

3. Method according to claim 1 or 2, wherein the solution consists of a solution of at least one dye in methanol, and/or water, and/or alcohol.

4. Method according to claim 1, wherein the dispersion comprises at least one dye and at least one acrylic paint.

5. Method according to any one of the preceding claims, comprising the step of drying the dye solution or the dye dispersion after step S1.

6. Method according to any one of the preceding claims, **characterized in that** the dye comprises at least one organic substance.

7. Method according to any one of the preceding claims, **characterized in that** the dye comprises at least one aromatic group.

8. Method according to any one of the preceding claims, **characterized in that** said the dye has thermal stability between about 400°C and about 800°C.

9. Method according to any one of the preceding claims, **characterized in that** the dye has a residual weight $\geq 20\%$ at a temperature between about 600°C and about 800°C in air.

10. Method according to any one of the preceding claims, **characterized in that** the pure dye or dye solution or dye dispersion comprises at least one xanthene dye.

11. Method according to any one of the preceding claims, **characterized in that** the pure dye or dye solution or dye dispersion comprises Eosin Y or Eosin B.

12. Method according to any one of the preceding claims, **characterized in that** the concentration of the dye in the solution is comprised between about 0.1 mol/L and about 0.6 mol/L, preferably between about 0.3 mol/l and about 0.5 mol/L.

13. Method according to any one of the preceding claims 1-11, **characterized in that** the concentration of the dye in the dispersion is comprised between about 0.1 mol/L and about 1 mol/L, preferably between about 0.2 mol/L and about 0.75 mol/L.

14. Method according to any one of the preceding claims, **characterized in that** the film formed on the substrate after coating has a thickness comprised between about 2000 nm and about 15000 nm.

15. Method according to any one of the preceding claims, **characterized in that** the film formed on the substrate after drying a dye solution has a thickness comprised between about 2000 nm and about 4000 nm.

16. Method according to according to any one of the preceding claims 1-14, **characterized in that** the film formed on the substrate after coating with a dye dispersion has a thickness comprised between about 4000 nm and about 15000 nm.

17. Laser-induced graphene (LIG) product obtained by a method according to any one of the preceding claims.

Fig. 1

Fig. 2

Fig. 3

Fig. 4

Fig. 5

Fig. 6

Fig. 7

Fig. 8

Fig. 9

Fig. 10

Fig. 11

Fig. 12

Europäisches
Patentamt
European
Patent Office
Office européen
des brevets

# EUROPEAN SEARCH REPORT

**Application Number**

EP 24 17 0488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/079919 A1 (CLAUSSEN JONATHAN [US] ET AL) 16 March 2023 (2023-03-16) | 17 | INV. C01B32/182 |
| Y | * paragraph [0121]; claims 1, 21, 26 * <br> * the whole document * | 1-16 | C01B32/184 |
| X | DATABASE WPI <br> Week 2022092 <br> Thomson Scientific, London, GB; <br> AN 2022-B81308 <br> XP002812563, <br> -& CN 115 015 345 A (UNIV HUNAN AGRIC) <br> 6 September 2022 (2022-09-06) | 17 | |
| Y | * abstract; claims 1, 6 * <br> * citations refer to the machine translation into English * <br> * the whole document * | 1-16 | |
| X | DATABASE WPI <br> Week 2022074 <br> Thomson Scientific, London, GB; <br> AN 2022-77426S <br> XP002812564, <br> -& CN 114 560 460 A (UNIV SOUTHERN SCI & TECHNOLOGY) 31 May 2022 (2022-05-31) | 17 | TECHNICAL FIELDS SEARCHED (IPC) <br><br> C01B |
| Y | * abstract; claims 1, 5, 9 * <br> * citations refer to the machine translation into English; <br> paragraph [0006]; example 1 * <br> * the whole document * | 1-16 | |
| X | WO 2018/085789 A1 (UNIV RICE WILLIAM M [US]; BEN GURION UNIV [IL]) <br> 11 May 2018 (2018-05-11) <br> * claims 71,72 * <br> * the whole document * | 1-17 | |

The present search report has been drawn up for all claims

| Place of search | Date of completion of the search | Examiner |
|---|---|---|
| The Hague | 13 November 2024 | Straub, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 24 17 0488

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | Publication date | Patent family member(s) | Publication date |
|---|---|---|---|
| US 2023079919 A1 | 16-03-2023 | US 2023079919 A1<br>WO 2023039571 A1 | 16-03-2023<br>16-03-2023 |
| CN 115015345 A | 06-09-2022 | NONE | |
| CN 114560460 A | 31-05-2022 | NONE | |
| WO 2018085789 A1 | 11-05-2018 | CN 110167877 A<br>EP 3535214 A1<br>US 2019330064 A1<br>US 2022267153 A1<br>WO 2018085789 A1 | 23-08-2019<br>11-09-2019<br>31-10-2019<br>25-08-2022<br>11-05-2018 |

EPO FORM P0459

For more details about this annex : see Official Journal of the European Patent Office, No. 12/82